# EUROPEAN PATENT SPECIFICATION

(11) **EP 0 406 766 B1**
(45) Date of publication and mention of the grant of the patent: **01.09.1993**
(21) Application number: 90112598.9
(22) Date of filing: 02.07.1990
(51) Int. Cl.: A01D 57/30, A01D 43/10

(54) **Mower**
Mähmaschine
Tondeuse

(30) Priority: 06.07.1989 GB 8915466
(43) Date of publication of application: 09.01.1991
(73) Proprietor: DEERE & COMPANY, Moline, Illinois 61265 (US)
(72) Inventor: Rostoucher, Guy, F-57200 Frauenberg (DE)
(74) Representative: Feldmann, Bernhard

(56) References cited:
- EP-A- 0 165 602
- DE-A- 3 011 450
- GB-A- 2 088 684

## Description

This invention relates to a mower for cutting crop and moving the cut crop rearwardly having a conveyor at the rear for receiving the cut crop and transporting it to one side of the machine, the conveyor being suspended by support arms and pivotable relative to the mower by way of at least one one-way hydraulic piston and cylinder unit about a horizontal pivot for its movement between a working position in the path of crop and a non-working position above the working position and away from the crop path.

Conventional mower-conditioners for harvesting hay which are drawn by a tractor and which are supported on a pair of wheels have a disc-type cutterbar at the front feeding either a pair of conditioning rolls or a conditioning impeller housed under a hood. The cut and conditioned crop is directed, at the rear of the machine, into a windrow.

Various proposals have been made for forming double windrows by using an attachment, at the rear of the machine, which conveys crop received from the conditioning rolls or impeller to the side of the machine to join a windrow which has been laid down in a previous pass of the mower-conditioner without using the attachment. Thus the attachment is designed to be movable between a non-working and a working position for the first and second passes respectively.

For example, it has been proposed in FR-A-2 483 736 to provide a horizontal conveyor with a planar surface, at the rear of a mower-conditioner at a level above support wheels of the machine, which has a working position in which crop falls onto it from conditioning rolls. The conveyor extends diagonally (in plan view) from the hood outlet to terminate behind the left hand wheel and there discharges the crop. The conveyor is mounted for swinging motion about a vertical pivot near its discharge end, and the conveyor can be swung between its diagonal working position just described to a transverse non-working position in which it is spaced sufficiently behind the hood that the crop issuing from under the hood will fall to the ground before reaching it and will simply be laid down in a normal windrow. The machine (with the conveyor in the non-working position) forms such a windrow in a first pass over the field, and the conveyor is then moved to its working position and a second pass made whereupon the crop is discharged by the conveyor onto, or directly beside, the first windrow so a double windrow is thereby produced.

In the conveyor's working position some part of the crop tends to miss it leading to losses. In its non-working position, on the other hand, the conveyor is still relatively near the ground so that it may sometimes be fouled by obstructions on the ground over which the machine has to pass. Furthermore, when in the non-working position the length of the machine is significantly extended, and indeed the balance of the machine (bearing in mind that it runs just on a pair of support wheels) can be affected.

Furthermore a double windrowing attachement for a mower comprising a reversibly driveable horizontal conveyor has been proposed (EP-A1-0 165 602). The mower is provided with a pair of hydraulic cylinders for raising the mower from a lowered harvesting position into an elevated transport position and this upward movement is utilized for mounting the attachment to the mower frame. The attachment includes a transverse beam for movably supporting the conveyor such that the conveyor is transversely shiftable between a first crop discharge position for forming a windrow inboard of one side of the mower and a second crop discharge position for forming a second windrow along the opposite side of the mower. To prevent crop from being discharged from the conveyor onto uncut crop, a switch reverses a hydraulic drive for the conveyor prior to the beginning of movement of the conveyor from the first to the second discharge position and reverses the hydraulic drive responsive to the completion of movement of the conveyor from the second to the first crop discharge position. This known conveyor cannot be raised into a non-operative position with the mower still in its lowered harvesting position for discharging severed crop onto the ground in a single centrally disposed windrow. Even in a raised position of the mower cut crop will at all time fall onto the conveyor. There is also no reason at all for this conveyor to be pivoted upwardly or for the mower and the conveyor to be relatively adjustable in a vertical direction as this double windrowing mechanism is especially useful with large harvesters.

The conveyor of the mower considered in the opening paragraph (GB-A-2 088 684) includes an auger having a series of flights and being rotatably supported within a trough for conveying cut crop laterally to an outboard position of the mower. The trough surrounding the top, rearward and bottom side of the auger is open along its front side to present an elongated port being below forming shields or a hood but distal to a conditioning mechanism when in the working position in which skids affixed to the underside of the trough ride along the ground. An extended portion of the auger projects through the discharge end of the trough laterally over the path of supporting wheels of the mower.

This conveyor is a very complicated and expensive design of heavy weight. Also here in the working position of the conveyor some part of the crop tends to miss the auger leading to losses or to blockage. The heavy weight is affecting the balance of the machine in the non-working position. The sliding on the ground needs higher traction and much power is requested for driving the conveyor.

The present invention enables one or more of the disadvantages discussed above to be overcome.

According to the invention the conveyor has a substantially planar surface and is supported by the piston and cylinder unit against downward movement when in the working position which is such that the crop falls onto and is supported by the conveyor under it.

Thus the working position can be near the ground to reduce losses, and yet the non-working position can be sufficiently spaced above any obstructions likely to be encountered. Furthermore, it is possible to arrange the non-working position, since it is above the working position, to be such that it does not represent any extension of the length of the machine.

The mower can be in the form of a mower-conditioner which can have conditioning rolls or a conditioning impeller.

An embodiment of the invention will now be described with reference to the accompanying diagrammatic drawings in which:
- Fig. 1: is a side view of a mower-conditioner with a double windrow attachent at its rear; and
- Fig. 2: is a plan view of the machine of Fig. 1.

In the drawings, a mower-conditioner 10 has a frame 12 mounted on a pair of left and right wheels 14, 16 by wheel arms 18, 20 and is drawn by a tractor (not shown) by way of a drawbar 22 which also affords support for the front end of the machine. A disc-type cutterbar 24 runs laterally across the width of the front of the mower-conditioner 10 for delivering cut hay to an impeller 26 aligned therewith and somewhat overlying its rearward portion. The impeller 26 is housed beneath a hood 28 a portion of which is adjustable and which extends both forwardly above the cutterbar 24 and also rearwardly where it forms a coverging discharge outlet 30 for the crop. Drive for the cutterbar 24 and impeller 26 is transmitted from the tractor. The mower-conditioner 10 thus far described is conventional.

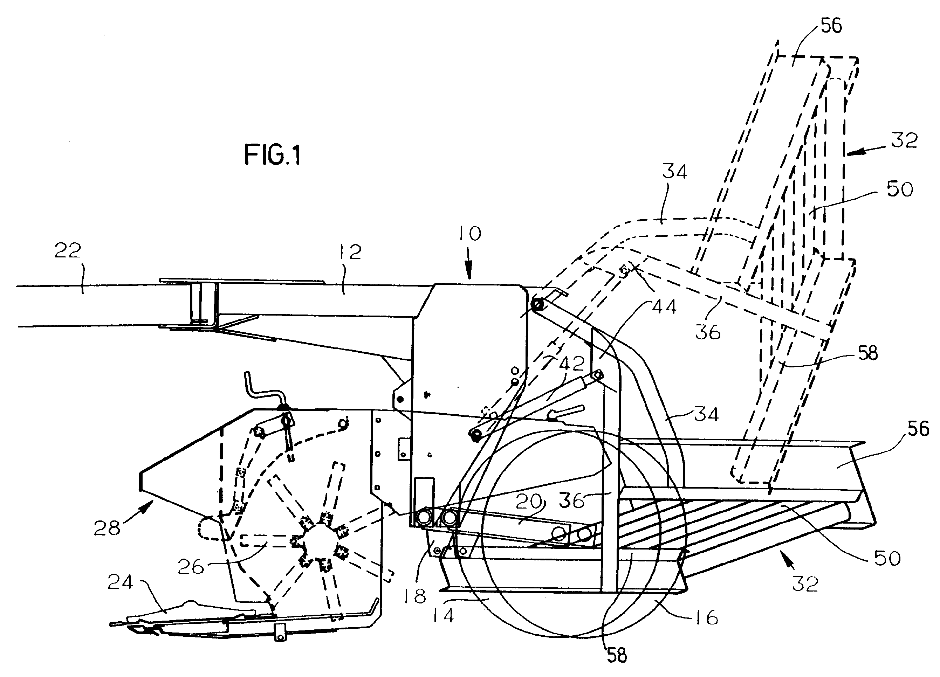

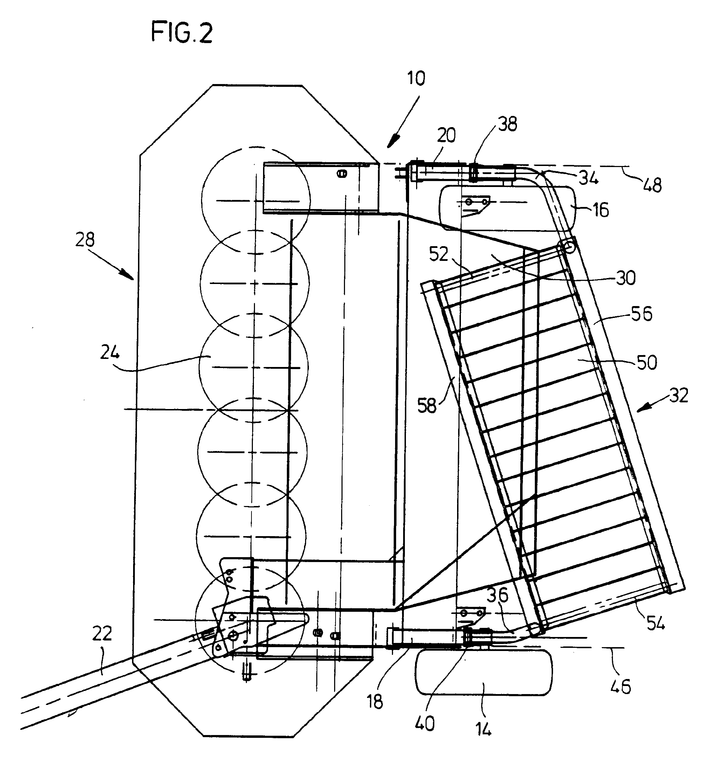

At the rear of the machine 10 is a double windrow attachment in the form of a conveyor 32 with a planar conveying surface. The conveyor is suspended at its right and left ends by right and left cranked support arms 34, 36 which are mounted on the machine by horizontal pivot pins 38, 40 respectively. The right hand pivot pin 38 is located outboard of the wheel 16 whilst the left pin 40 is inboard of the wheel 14. The conveyor 32 is swingable upwardly and downwardly about the pins 38, 40 by way of a pair of left and right one-way hydraulic piston and cylinder units of which only the left hand unit 42 is shown in Fig. 1 since it masks the right hand unit and which are pivotally attached at their upper ends to brackets, e.g. bracket 44, rigid with the respective arms 36, 34 and at their lower ends to the machine 10, the axes of the units being indicated by lines 46, 48 in Fig. 2.

The operative position of the conveyor 32 is that indicated in continous lines in Figs 1 and 2. In this position the conveyor 32 which is rectangular in plan view extends between the wheels 14, 16 but does not reach the path of the wheels, it being accomodated wholly within the track of the machine 10. Desirably the conveyor 32 is at least partly below the level of the axis of the wheels 14, 16.

The conveyor 32 has a conveying element 50 formed from a wide belt of rubber, reinforced with polyester fibre, and cross slats of rubber-covered fibreglass attached by adhesive to the belt. The belt runs over end rolls 52, 54 one of which is driven by a hydraulic motor (not shown) and which are journalled in side walls 56, 58 of the conveyor 32. The side walls 56, 58 act as containment walls for the crop, the wall 56 being along the rearward side when the conveyor 32 is in the operative position and extending higher than the forward wall 58 to ensure deflection of any stray crop in flight onto the conveying element 50. Furthermore, the conveyor 32 is inclined at an angle preferably of 10 to 40° to the horizontal so that its rearward side is higher than its forward side. This tilt serves to increase the aggression on the crop. If desired, the forward side wall 58 can be formed to extend (in the operative position) at its upper portion closely toward the impeller 26 so that the wall 58 will catch stray crop, which may otherwise fall between the impeller 26 and the conveyor 32, and direct that crop onto the conveyor.

The inoperative or storage position of the conveyor 32 is shown in broken lines in Fig. 1. Here, the conveyor is approximately upright, being in this embodiment at an angle of about 15° to the vertical although the precise angle is not critical. What is important is that the inoperative position is higher than the operative position and does not cause any significant increase in the length of the machine. It is desirable that the inoperative position overlies the operative position.

The hydraulic motor driving the roll 52 or 54 is in hydraulic circuit with a valve arranged to stop the drive when triggered by the conveyor 32 moving to the inoperative position.

In operation, for a first pass through a hay crop the conveyor 32 is in its raised storage position. The hay is severed by the cutterbar 24, passes rearwardly to the impeller 26 where it is conditioned travelling between the impeller 26 and the hood 28, and is discharged through the outlet 30 to form a windrow on the ground. At the end of the pass, the piston and cylinder units are retracted to swing the conveyor 32 downwardly through approximately 90° about the pivot pins 38, 40 to the operative position.

A second pass is then made. The conditioned crop is discharged onto the moving conveyor 50 which ejects the crop at its left hand end onto (or closely beside) the windrow laid down on the first pass so that a double windrow is formed. Since the piston and cylinder units are operated "one-way", they do not resist any upward movement of the conveyor 50. Thus if the conveyor 50 encounters an obstruction on the ground it can ride over it without damage.

At the third pass, the piston and cylinder units are again extended to return the conveyor 50 to its raised storage position and a single windrow is formed, and the procedure repeated.

## Claims

1. Mower for cutting crop and moving the cut crop rearwardly having a conveyor (32) at the rear for receiving the cut crop and transporting it to one side of the machine, the conveyor (32) being suspended by support arms (34, 36) and pivotable relative to the mower by way of at least one one-way hydraulic piston and cylinder unit (42) about a horizontal pivot (38, 40) for its movement between a working position in the path of crop and a non-working position above the working position and away from the crop path, characterised in that the conveyor (32) has a substantially planar surface and is supported by the piston and cylinder unit (42) against downward movement when in the working position which is such that the crop falls onto and is supported by the conveyor (32) under it.

2. Mower according to claim 1 characterised in that the conveyor (32) in its non-working position is approximately upright.

3. Mower according to claim 1 or 2 characterised in that the conveyor (32) when in the working position is inclined so that its rearward side is higher than its forward side.

4. Mower according to claim 3 characterised in that the conveyor (32) is inclined at an angle of 10 to 40° to the horizontal.

5. Mower according to any preceding claim characterised in that in plan view the conveyor (32) when in the working position does not extend laterally to the path of supporting wheels (14, 16) of the machine.

6. Mower according to any preceding claim having a disc cutterbar (24), a conditioning device (26) behind the cutterbar (24), and a hood (28) over the conditioning device (26), arranged so that crop cut by the cutterbar (24) is received therefrom by the conditioning device (26) characterised in that the conditioning device is an impeller (26), the crop is moved rearwardly between the impeller (26) and hood (28), and the hood (28) partially overlies the conveyor (32) when in its working position.

7. Mower according to claim 6 characterised in that the conveyor (32) has a crop-containment wall (58) along its forward side when considered in the working position, the forward wall (58) extending sufficiently toward the impeller (26) so as to catch stray crop which may otherwise fall between the impeller (26) and conveyor (32).

8. Mower according to any preceding claim characterised in that the conveyor (32) when in its working position is at least partly below the level of an axis about which supporting wheels (14, 16) of the machine turn.

9. Mower according to any preceding claim characterised in that the conveyor (32) is drivingly connected to a hydraulic motor in circuit with an hydraulic valve which is arranged to be triggered by movement of the conveyor (32) to its non-working position to stop the drive to the conveyor (32).

10. Mower according to any preceding claim characterised in that the conveyor (32) has a crop-containment wall (56) along its rearward side when considered in the working position.

11. Mower according to any preceding claim characterised in that the non-working position of the conveyor (32) overlies the operative position.

12. Mower according to any preceding claim, characterised in that the conveyer (32) is suspended by two cranked support arms (34, 36) of rigid construction and one of which is affixed to the rearward side of the conveyor (32) and pivoted to the frame (12) of the mower (10) by a horizontal pivot pin (38 or 40 resp.)

13. Mower according to any preceding claim characterised in that the conveyor (32) is a belt conveyor.

## Patentansprüche

1. Mäher zum Schneiden von Gut und zum Bewegen des geschnittenen Gutes nach rückwärts mit einem Förderer (32) an der Rückseite zum Aufnehmen des geschnittenen Gutes und zu seinem Fördern nach einer Seite der Maschine, wobei der Förderer (32) mittels Tragarme (34, 36) aufgehängt und mittels wenigstens einer einseitig beaufschlagbaren hydraulischen Kolben- und Zylindereinheit (42) um einen horizontalen Zapfen (38, 40) für seine Bewegung zwischen einer Arbeitsstellung im Gutdurchgang und einer Nicht-Arbeitsstellung oberhalb der Arbeitsstellung und von dem Gutdurchgang entfernt mit Bezug auf den Mäher schwenkbar ist, dadurch gekennzeichnet, daß der Förderer (32) eine im wesentlichen planare Oberfläche aufweist und in der Arbeitsstellung, die derart ist, daß das Gut auf den Förderer (32) fällt und von dem unter ihm liegenden Förderer (32) getragen wird, durch die Kolben- und Zylindereinheit (42) gegen eine Abwärtsbewegung abgestützt ist.

2. Mäher nach Anspruch 1, dadurch gekennzeichnet, daß der Förderer (32) sich in seiner Nicht-Arbeitsstellung etwa senkrecht befindet.

3. Mäher nach Anspruch 1 oder 2, dadurch gekennzeichnet, daß der Förderer (32), wenn er sich in seiner Arbeitsstellung befindet, geneigt ist, so daß seine rückwärtige Seite höher ist als seine vordere Seite.

4. Mäher nach Anspruch 3, dadurch gekennzeichnet, daß der Förderer (32) in einem Winkel von 10° bis 40° zur Horizontalen geneigt ist.

5. Mäher nach irgendeinem vorhergehenden Anspruch, dadurch gekennzeichnet, daß der Förderer, wenn er sich in der Arbeitsstellung befindet, in der Draufsicht seitlich sich nicht bis zu der Spur von Transporträdern (14, 16) der Maschine erstreckt.

6. Mäher nach irgendeinem vorhergehenden Anspruch mit einem Scheibenmähwerk (24), einer Konditionierungseinrichtung (26) hinter dem Mähwerk (24) und einer Haube (28) über der Konditionierungseinrichtung (26), die so angeordnet ist, daß von dem Mähwerk (24) geschnittenes Gut von diesem durch die Konditionierungseinrichtung (26) aufgenommen wird, dadurch gekennzeichnet, daß die Konditionierungseinrichtung ein Schlagzetter (26) ist, das Gut nach rückwärts zwischen den Schlagzetter (26) und der Haube (28) bewegt wird und daß die Haube (28) den Förderer (32), wenn er sich in seiner Arbeitsstellung befindet, teilweise überlagert.

7. Mäher nach Anspruch 6, dadurch gekennzeichnet, daß der Förderer (32) mit einer Gut haltenden Wand (58) entlang seiner vorderen Seite, wenn man die Arbeitsstellung in Betracht zieht, versehen ist, wobei die vordere Wand (58) sich ausreichend weit in Richtung auf den Schlagzetter (26) erstreckt, um vom Weg abgekommenes Gut aufzufangen, das sonst zwischen den Schlagzetter (26) und den Förderer (32) fallen könnte.

8. Mäher nach irgendeinem vorhergehenden Anspruch, dadurch gekennzeichnet, daß der Förderer (32), wenn er sich in seiner Arbeitsstellung befindet, zumindest teilweise unter dem Niveau einer Achse, um die Transporträder (14, 16) der Maschine drehen, liegt.

9. Mäher nach irgendeinem vorhergehenden Anspruch, dadurch gekennzeichnet, daß der Förderer (32) mit einem hydraulischen Motor in einen Kreislauf mit einem hydraulischen Ventil antriebsmäßig verbunden ist, das durch eine Bewegung des Förderers (32) in seine Nicht-Arbeitsstellung zum Ausschalten des Antriebs des Förderers (32) ausgelöst werden kann.

10. Mäher nach irgendeinem vorhergehenden Anspruch, dadurch gekennzeichnet, daß der Förderer (32) mit einer Gut haltenden Wand (56) entlang seiner Rückseite versehen ist, wenn man die Arbeitsstellung in Betracht zieht.

11. Mäher nach irgendeinem vorhergehenden Anspruch, dadurch gekennzeichnet, daß die Nicht-Arbeitsstellung des Förderers (32) die Betriebsstellung überlagert.

12. Mäher nach irgendeinem vorhergehenden Anspruch, dadurch gekennzeichnet, daß der Förderer (32) durch zwei abgekröpfte Tragarme (34, 36) von starrem Aufbau hängend angeordnet ist und daß einer von diesen mit der Rückseite des Förderers (32) fest verbunden und an den Rahmen (12) des Mähers (12) durch einen horizontalen Schwenkzapfen (38 oder 40) angelenkt ist.

13. Mäher nach irgendeinem vorhergehenden Anspruch, dadurch gekennzeichnet, daß der Förderer (32) ein Förderband ist.

## Revendications

1. Faucheuse pour couper une récolte et déplacer la matière récoltée coupée vers l'arrière, comprenant un convoyeur (32) à l'arrière pour recevoir la matière coupée et la transporter vers un côté de la machine, le convoyeur (32) étant suspendu par des bras de suspension (34,36) et pouvant pivoter par rapport à la faucheuse sous l'action d'au moins un vérin hydraulique unidirectionnel (42) autour d'un pivot horizontal (38,40) pour son mouvement entre une position de travail, sur le chemin de la matière récoltée, et une position inactive au-dessus de la position de travail et en dehors du chemin de la matière récoltée, caractérisée en ce que le convoyeur (32) présente une surface sensiblement plane et est supporté par le vérin (42) contre un mouvement de descente, lorsqu'il est dans la position de travail qui est telle que la matière récoltée tombe sur le convoyeur (32) placé au-dessous et est supportée par celui-ci.

2. Faucheuse suivant la revendication 1, caractérisée en ce que le convoyeur (32) dans sa position inactive est approximativement vertical.

3. Faucheuse suivant la revendication 1 ou 2, caractérisée en ce que le convoyeur (32), lorsqu'il est dans la positon de travail, est incliné de sorte que son côté arrière est plus haut que son côté avant.

4. Faucheuse suivant la revendication 3, caractérisée en ce que le convoyeur (32) est incliné d'un angle de 10 à 40° par rapport à l'horizontale.

5. Faucheuse suivant une quelconque des revendications précédentes, caractérisée en ce que, en vue en plan, le convoyeur (32) lorsqu'il est dans la position de travail ne s'étend pas latéralement jusqu'au chemin des roues porteuses (14,16) de la machine.

6. Faucheuse suivant une quelconque des revencations précédentes, comprenant une barre de coupe à disques (24), un dispositif de conditionnement (26) à l'arrière de la barre de coupe (24) et un capot (28) au-dessus du dispositif de conditionnement (26), agencés de sorte que la matière récoltée coupée par la barre de coupe (24) est reçue, en provenance de celle-ci, par le dispositif de conditionnement (26), caractérisée en ce que le dispositif de conditionnement est un impulseur (26), la matière récoltée est déplacée vers l'arrière entre l'impulseur (26) et le capot (28), et le capot (28) chevauche partiellement le convoyeur (32) lorsque celui-ci est dans sa position de travail.

7. Faucheuse suivant la revendication 6, caractérisée en ce que le convoyeur (32) comporte une paroi de confinement de matière récoltée (58) le long de son côté avant lorsqu'il est considéré dans la position de travail, la paroi avant (58) s'étendant suffisamemnt vers l'impulseur (26) pour capturer la matière récoltée détachée qui pourrait sans cela tomber entre l'impulsueur (26) et le convoyeur (32).

8. Faucheuse suivant une quelconque des revendications précédentes, caractérisée en ce que le convoyeur (32), lorsqu'il est dans sa position de travail, est au moins partiellement au-dessous du niveau d'un axe autour duquel les roues porteuses (14,16) de lamachine tournent.

9. Faucheuse suivant une quelconque des revendications précédentes, caractérisée en ce que le convoyeur (32) est relié en entraînement à un moteur hydraulique en circuit avec une vanne hydraulique qui est agencée de manière à être déclenchée par un mouvement du convoyeur (32) vers sa position inactive, afin d'arrêter l'entraînement du convoyeur (32).

10. Faucheuse suivant une quelconque des revendications précédentes, caractérisée en ce que le convoyeur (32) comporte une paroi de confinement de matière récoltée (56) le long de son côté arrière lorsqu'on le considère dans la position de travail.

11. Faucheuse suivant une quelconque des revendications précédentes, caractérisée en ce que la position inactive du convoyeur (32) est située au-dessus de la position de travail.

12. Faucheuse suivant une quelconque des revendications précédentes, caractérisée en ce que le convoyeur (32) est suspendu par deux bras de suspension coudés (34, 36) de construction rigide et dont l'un est fixé au côté arrière du convoyeur (32) et pivote sur le châssis (12) de la faucheuse (10) par l'intermédiaire d'un axe de pivot horizontal (38 ou 40 respectivement).

13. Faucheuse suivant une quelconque des revendications précédentes, caractérisée en ce que le convoyeur (32) est un convoyeur à courroie.
